# EUROPEAN PATENT APPLICATION

(11) **EP 4 579 772 A1**
(43) Date of publication of application: **02.07.2025**
(21) Application number: 24189825.3
(22) Date of filing: 19.07.2024
(51) Int. Cl.: H01M 4/04, H01M 4/02

(54) **APPARATUS AND METHOD FOR MEASURING ELECTRODE PLATE THICKNESS**

(30) Priority: 28.12.2023 KR 20230194966
(71) Applicant: Samsung SDI Co., Ltd, Gyeonggi-do 17084 (KR)
(72) Inventor: Kim, So Hun, 16678 Suwon-si, Gyeonggi-do (KR); Kim, Gi Sung, 16678 Suwon-si, Gyeonggi-do (KR); Seo, Won Sub, 16678 Suwon-si, Gyeonggi-do (KR); Park, Jin Seo, 16678 Suwon-si, Gyeonggi-do (KR); Pyo, Young Hak, 16678 Suwon-si, Gyeonggi-do (KR); Choi, Kyung Taek, 16678 Suwon-si, Gyeonggi-do (KR); Kim, Byoung Kuk, 16678 Suwon-si, Gyeonggi-do (KR)
(74) Representative: Gulde & Partner

(57) **Abstract**

An apparatus (40, 100) and method for measuring an electrode plate thickness, which can measure a thickness of an active material coating layer formed on an electrode plate (10) before drying the electrode plate (10). The apparatus (40, 100) for measuring an electrode plate thickness includes a sensor module (110) disposed upstream of a drying furnace (50) to detect a thickness of an electrode plate (10), and a processor (140) configured to detect the thickness of the electrode plate (10) at each location in a width direction through the sensor module (110), to calculat an active material coating thickness at each location based on the thickness of the electrode plate (10) at each location, to calculate a measurement error at each location due to thermal deformation of the sensor module (110), and to compensate the active material coating thickness at each location based on the measurement error at each location.

## Description

### BACKGROUND

### 1. Field

Aspects of embodiments of the present disclosure relate to an apparatus and method for measuring an electrode plate thickness.

### 2. Description of the Related Art

In recent years, with development and increasing demand for mobile technology, demand for secondary batteries as an energy source has rapidly increased, and research has been conducted on batteries that can satisfy various requirements. In particular, there is high demand for lithium secondary batteries with high energy density, discharge voltage, and output stability.

Generally, a secondary battery is manufactured by applying active materials to surfaces of current collectors to form a cathode plate and an anode plate (hereinafter, commonly referred to as an electrode plate), disposing a separator therebetween to form an electrode assembly, and mounting the electrode assembly inside a cylindrical or faceted metal can or a pouch-shaped case of an aluminum laminated sheet. Then, the secondary battery is completed by injecting a liquid electrolyte into the electrode assembly to embed the electrode plate in the electrolyte or using a solid electrolyte.

It is suitable for such secondary batteries to secure the same quality of battery performance, and to sufficiently control the thickness of the electrode plate on the surface of the current collector.

Typically, the thickness of the electrode plate is measured by a radiation device disposed behind a drying furnace. However, this technique may have a problem in that coating failure cannot be rapidly checked.

This section is intended only to provide a better understanding of the background of the invention and thus may include information which is not necessarily prior art.

### SUMMARY

It is an aspect of the present invention to provide an apparatus and method for measuring an electrode plate thickness, which can measure a thickness of an active material coating layer formed on an electrode plate before drying the electrode plate through a dryer.

The above and other aspects and features of the present invention will become apparent from the following description of embodiments of the present invention.

In accordance with an aspect of the present invention, there is provided an apparatus for measuring an electrode plate thickness, which detects an electrode plate thickness at each location in a width direction through a sensor module, calculates an active material coating thickness at each location based on the electrode plate thickness at each location, calculates a measurement error at each location due to thermal deformation of the sensor module, and compensates the active material coating thickness at each location based on the measurement error at each location.

An apparatus for measuring an electrode plate thickness may include a sensor module disposed upstream of a drying furnace and detecting a thickness of an electrode plate; and a processor connected to the sensor module, wherein the processor detects the thickness of the electrode plate at each location in a width direction through the sensor module, calculates an active material coating thickness at each location based on the thickness of the electrode plate at each location, and compensates the active material coating thickness at each location based on a measurement error at each location due to thermal deformation of the sensor module.

The sensor module may include a first sensor module disposed above the electrode plate and measuring a distance to the electrode plate and a second sensor module disposed below the electrode plate and measuring a distance to the electrode plate, the first sensor module and the second sensor module being synchronously controlled.

The processor may calculate the active material coating thickness at each location by performing a process of subtracting an electrode plate thickness measured before coating with an active material from the thickness of the electrode plate detected by the sensor module.

The processor may detect electrode plate thicknesses at first locations not coated with an active material and may calculate the measurement error at each location based on the electrode plate thicknesses at the first locations.

The processor may calculate a measurement error at each of the first locations by performing, for each of the first locations, a process of subtracting an electrode plate thickness measured at the first location before coating with the active material from the electrode plate thickness at the first location.

The processor may compensate the active material coating thickness at each location by performing, for each location, a process of subtracting the measurement error from the active material coating thickness.

The processor may transmit information about the active material coating thickness at each location to an active material coating device adapted to coat the electrode plate with an active material such that a pump, a valve, and a slot die of the active material coating device may be under feedback control.

The processor may determine whether coating failure of the electrode plate occurs based on the active material coating thickness at each location.

The processor may determine a target column among a plurality of columns of active material coating layers formed on the electrode plate and may determine whether coating failure occurs in the target column by repeating a process of determining whether coating failure occurs in the target column while changing the target column.

The processor may determine whether coating failure occurs in the target column by dividing the target column into multiple zones, determining a target zone among the multiple zones, and repeating a process of determining whether coating failure occurs in the target zone while changing the target zone.

A method for measuring an electrode plate thickness carried out by a computing device may include a processor, the method may include detecting an electrode plate thickness at each location in a width direction through a sensor module disposed upstream of a drying furnace; calculating an active material coating thickness at each location based on the electrode plate thickness at each location; and compensating the active material coating thickness at each location based on a measurement error at each location due to thermal deformation of the sensor module.

The step of calculating an active material coating thickness at each location may include performing, for each location, a process of subtracting an electrode plate thickness measured before coating with an active material from the electrode plate thickness detected through the sensor module to calculate the active material coating thickness at each location.

The step of calculating a measurement error at each location may include detecting electrode plate thicknesses at first locations not coated with an active material and calculating the measurement error at each location based on the electrode plate thicknesses at the first locations.

The step of calculating a measurement error at each location may include performing, for each of the first locations, a process of subtracting an electrode plate thickness measured at the first location before coating with the active material from the electrode plate thickness at the first location to calculate a measurement error at the first location.

The step of compensating the active material coating thickness at each location may comprise performing, for each location, a process of subtracting the measurement error from the active material coating thickness to compensate the active material coating thickness at each location.

The method may further include after the step of compensating the active material coating thickness at each location, transmitting information about the active material coating thickness at each location to an active material coating device adapted to coat the electrode plate with an active material such that a pump, a valve, and a slot die of the active material coating device are under feedback control.

According to an aspect of the invention, the thickness of an active material coating layer formed on an electrode plate can be measured before drying the electrode plate through a dryer.

According to an aspect of the invention, the thickness of the active material coating layer formed on the electrode plate can be calculated more accurately through compensation for measurement errors caused by thermal deformation of the sensor module.

According to an aspect of the invention, it is possible to detect streak defect that occurs in the course of coating an electrode plate with active material slurries.

However, aspects and features of the invention are not limited to those described above and other aspects and features not mentioned will be clearly understood by those skilled in the art from the detailed description given below.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a block diagram of an apparatus for measuring an electrode plate thickness;
FIG. 2A and FIG. 2B are views of an electrode plate coated with an active material;
FIG. 3 is a view of a sensor module;
FIG. 4 is a view illustrating thermal deformation of the sensor module;
FIG. 5 is a flowchart illustrating a method for measuring an electrode plate thickness;
FIG. 6A and FIG. 6B are views illustrating a process of calculating an active material coating thickness;
FIG. 7 is a flowchart illustrating a process of calculating a measurement error;
FIG. 8 is a view illustrating the process of calculating a measurement error;
FIG. 9 is a flowchart illustrating a process of determining occurrence of coating failure;
FIG. 10 to FIG. 12 are views illustrating the process of determining occurrence of coating failure;
FIG. 13 is a flowchart illustrating the process of determining occurrence of coating failure;
FIG. 14 is views illustrating the process of determining occurrence of coating failure; and
FIG. 15 is a diagram of an electrode plate coating device according to an embodiment of the present invention.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

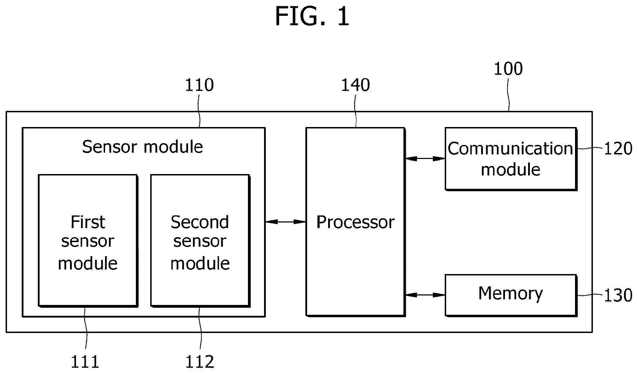

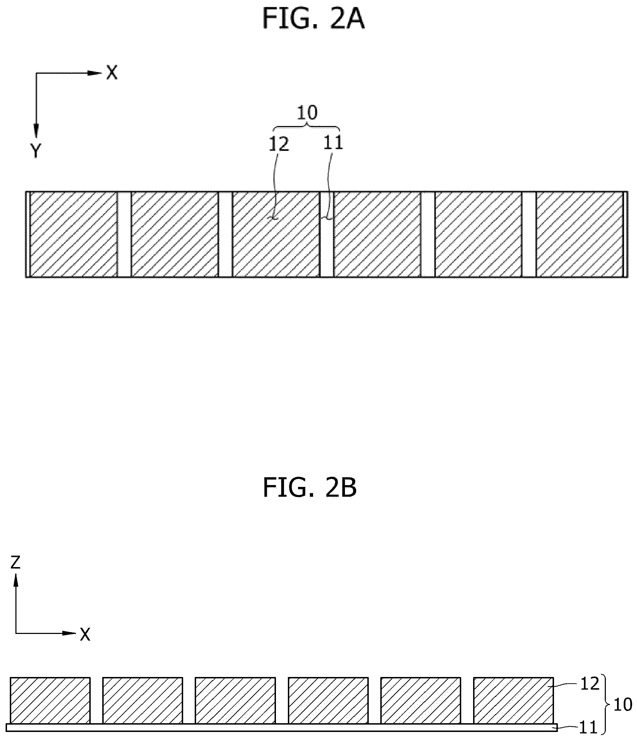

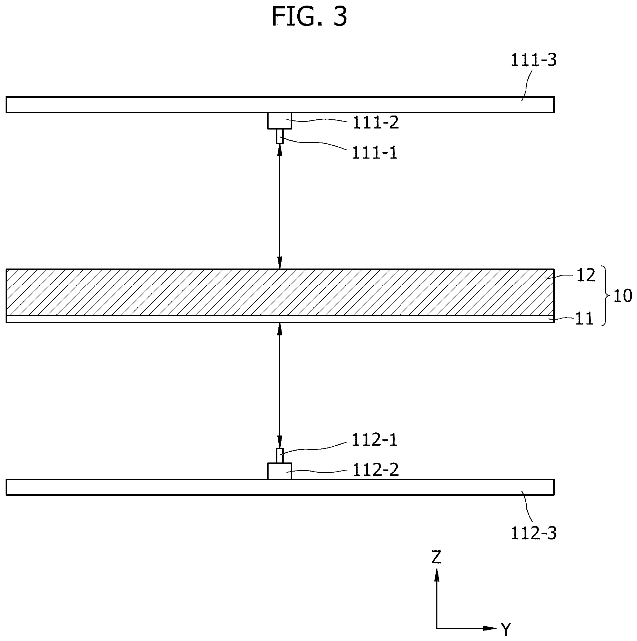

FIG. 1 is a block diagram of an apparatus for measuring an electrode plate thickness, FIG. 2A and FIG. 2B are views of an electrode plate coated with an active material, and FIG. 3 is a view of a sensor module.

Referring to FIG. 1, the measurement apparatus 100 for measuring an electrode plate thickness 100 according to the embodiment may include a sensor module 110, a communication module 120, a memory 130, and a processor 140. Each of the components included in the apparatus 100 according to the embodiment may be connected to each other through a common bus or through individual interfaces or individual buses centered on the processor 140. The measurement apparatus 100 according to the embodiment may further include various components in addition to the components shown in FIG. 1 or may omit some of these components.

The sensor module 110 may be disposed upstream of a drying furnace adapted to dry an electrode plate 10 coated with an active material slurry. The sensor module 110 may detect a thickness of the electrode plate 10. The sensor module 110 may detect the thickness of the electrode plate 10 before the active material slurry coated on the electrode plate 10 is dried. The sensor module 110 may detect the thickness of the electrode plate at each location in a width direction of the electrode plate 10.

Referring to FIG. 2A and FIG. 2B, the electrode plate 10 may include a base layer (or current collector) 11 and an active material coating layer 12. The base layer 11 may be a metal sheet. The base layer 11 may be composed of aluminum or nickel for a cathode plate, and may be composed of copper, nickel, or stainless steel for an anode plate. However, it should be understood that the composition of the base layer 11 is not limited thereto. The active material coating layer 12 may be composed of a cathode material for the cathode plate and may be composed of an anode material for the anode plate.

The active material coating layer 12 may be formed on the electrode plate 10. The electrode plate 10 may be formed with a plurality of columns of active material coating layers 12. The electrode plate 10 may be moved in a Y direction by a guide roll and the sensor module 110 may periodically detect the thickness of the electrode plate at each location of the electrode plate 10 in an X direction thereof.

Referring to FIG. 3, the sensor module 110 may include a first sensor module 111 and a second sensor module 112. The first sensor module 111 may be disposed above the electrode plate 10. The first sensor module 111 may measure a distance from the first sensor module 111 to the electrode plate 10. Referring again to FIG. 3, the first sensor module 111 may include a first displacement sensor 111-1, a first movable module 111-2, and a first base 111-3.

The first base 111-3 may be disposed at a location separated a predetermined distance from a certain point on a movement path of the electrode plate 10 in a height direction (positive direction of the Z-axis) of the electrode plate 10. The first movable module 111-2 may be movable on the first base 111-3. The first movable module 111-2 may be movable in the width direction (X-axis direction) of the electrode plate 10. The first movable module 111-2 may include a motor, a rail, or the like. The first displacement sensor 111-1 may be disposed under the first movable module 111-2. The first displacement sensor 111-1 may be a laser displacement sensor. The first displacement sensor 111-1 may detect a distance to an upper surface of the electrode plate 10.

The first displacement sensor 111-1 may detect a distance to an upper surface of the active material coating layer 12 as the distance to the electrode plate 10 when the first movable module 111-2 is placed above a column of the active material coating layer 12. The first displacement sensor 111-1 may detect a distance to an upper surface of the base layer 11 as the distance to the electrode plate 10 when the first movable module 111-2 is placed in a region other than a region above the column of the active material coating layer 12.

The second sensor module 112 may be disposed below the electrode plate 10. The second sensor module 112 may measure a distance from the second sensor module 112 to the electrode plate 10. The second sensor module 112 may include a second displacement sensor 112-1, a second movable module 112-2, and a second base 112-3.

The second base 112-3 may be disposed at a location separated by a distance (e.g., a predetermined distance) from a certain point on the movement path of the electrode plate 10 in the height direction (negative direction of the Z-axis) of the electrode plate 10. The second movable module 112-2 may be movable on the second base 112-3. The second movable module 112-2 may be movable in the width direction (X-axis direction) of the electrode plate 10. The second movable module 112-2 may include a motor, rails, or the like. The second displacement sensor 112-1 may be disposed on the second movable module 112-2. The second displacement sensor 112-1 may be a laser displacement sensor. The second displacement sensor 112-1 may detect a distance to a lower surface of the electrode plate 10.

The first movable module 111-2 and the second movable module 112-2 may operate independently. The first movable module 111-2 and the second movable module 112-2 may be synchronously controlled. The first movable module 111-2 and the second movable module 112-2 may be positioned to always face each other. For example, when the first movable module 111-2 is placed at a point (a, b) on the X-Y axis, the second movable module 112-2 may also be placed at the point (a, b) on the X-Y axis.

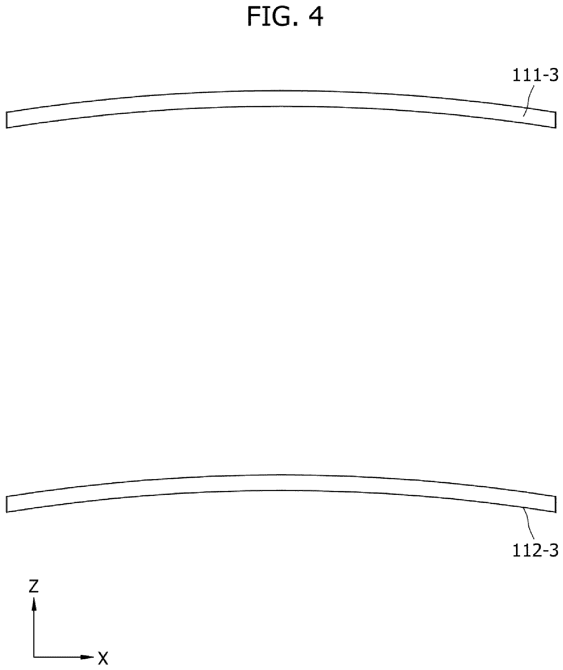

The first movable module 111-2 may generate heat during operation. The heat generated during operation of the first movable module 111-2 may be transferred to the first base 111-3. If the heat generated during operation of the first movable module 111-2 is continuously transferred to the first base 111-3, the first base 111-3 can suffer from thermal deformation, as shown in FIG. 4. The heat generated during operation of the first movable module 111-2 can increase the length of the first base 111-3, causing the first base 111-3 to be bent. Thermal deformation of the first base 111-3 can cause a measurement error of the first displacement sensor 111-1. For example, when the base layer 11 has a thickness of 8 µm, a temperature change of about 10°C can cause a measurement error of about 0.4 µm. The second sensor module 112 can undergo the same phenomenon.

The communication module 120 may communicate with an external device. For example, the communication module 120 may communicate with an active material coating device 30 (also referred to as electrode plate coating device 30) adapted to coat the electrode plate 10 with an active material, and may transmit information about the active material coating thickness calculated by the processor 140, described below, to the active material coating device 30.

The memory 130 may store at least one instruction executed by the processor 140. Such a memory 130 may be realized by volatile and/or non-volatile storage media, for example, read only memory (ROM) and/or random access memory (RAM).

The memory 130 may store various information required for the processor 140 to operate. The memory 130 may store various information produced by the processor 140 in operation thereof.

The processor 140 may be operatively coupled to the sensor module 110, the communication module 120, and the memory 130. The processor 140 may be realized by a central processing unit (CPU) or system-on-chip (SoC). The processor 140 may run an operating system or application to control a plurality of hardware or software components connected to the processor 140 and may perform various data processing and computations. The processor 140 may be configured to execute at least one instruction stored in the memory 130, and to store execution result data in the memory 130.

The processor 140 may detect the thickness of the electrode plate at each location in the width direction through the sensor module 110, may calculate an active material coating thickness at each location based on the thickness of the electrode plate at each location, may calculate a measurement error due to thermal deformation of the sensor module 110, and may compensate the calculated active material coating thickness at each location based on the calculated measurement error. The processor 140 may calculate a measurement error due to thermal deformation of the first and second bases 111-3 and 112-3 and may compensate the calculated active material coating thickness at each location based on the calculated measurement error at each location to achieve more accurate calculation of the active material coating thickness.

In the following description, an apparatus and method for measuring an electrode plate thickness according to an embodiment of the present invention will be described based on the above description. Some of processes described below may be performed in a different sequence from the sequence described herein or may be omitted.

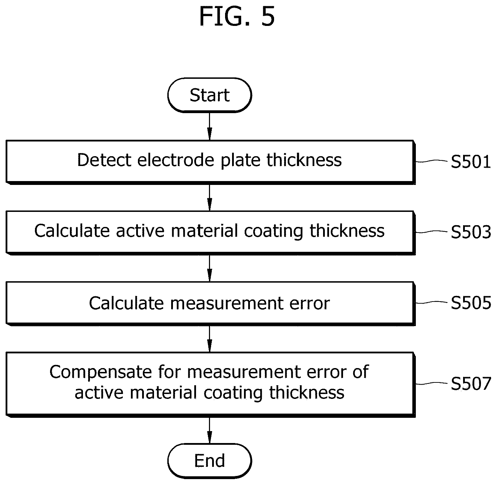

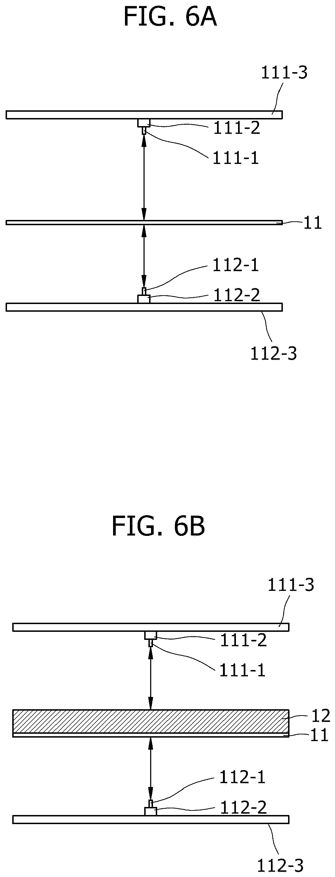

FIG. 5 is a flowchart illustrating a method for measuring an electrode plate thickness and FIG. 6A and 6B are views illustrating a process of calculating an active material coating thickness.

Referring to FIG. 5, the processor 140 may first detect an electrode plate thickness at each location through the sensor module 110 (S501). As shown in FIG. 6(b), the processor 140 may repeatedly perform a process of detecting the electrode plate thickness through the sensor module 110 while moving the sensor module 110 in the X-axis direction. The processor 140 may detect the electrode plate thickness based on the distance to the upper surface of the electrode plate 10 detected through the first sensor module 111 and the distance to the lower surface of the electrode plate 10 detected through the second sensor module 112.

Next, the processor 140 may calculate the active material coating thickness at each location based on the detected electrode plate thickness at each location (S503). The processor 140 may calculate the active material coating thickness at each location by performing, for each location of the electrode plate, a process of subtracting an electrode plate thickness measured before coating with an active material from the electrode plate thickness detected through the sensor module 110. The processor 140 may calculate the active material coating thickness by subtracting the electrode plate thickness detected in a state shown in FIG. 6B from the electrode plate thickness detected in a state shown in FIG. 6A. The electrode plate thickness at each location before coating with the active material may be detected in advance and stored in the memory 130. Here, the electrode plate thickness measured before coating with the active material may refer to an electrode plate thickness measured before thermal deformation occurs in the sensor module 110, for example, an electrode plate thickness that does not include a measurement error due to thermal deformation of the sensor module 110.

Next, the processor 140 may calculate a measurement error at each location due to thermal deformation of the sensor module 110 (S505), and may compensate the calculated active material coating thickness at each location based on the calculated measurement error at each location (S507). The processor 140 may compensate the active material coating thickness at each location by performing, for each location of the electrode plate, a process of subtracting the measurement error calculated in Step S505 from the active material coating thickness calculated in Step S503.

When the sensor module 110 is continuously operated, heat generated from the sensor module 110 can cause thermal deformation of the sensor module 110. Thus, the active material coating thickness calculated in step S503 can include a measurement error due to thermal deformation of the sensor module 110. According to this embodiment, the active material coating thickness may be more accurately calculated by compensating for the measurement error caused by thermal deformation of the sensor module 110.

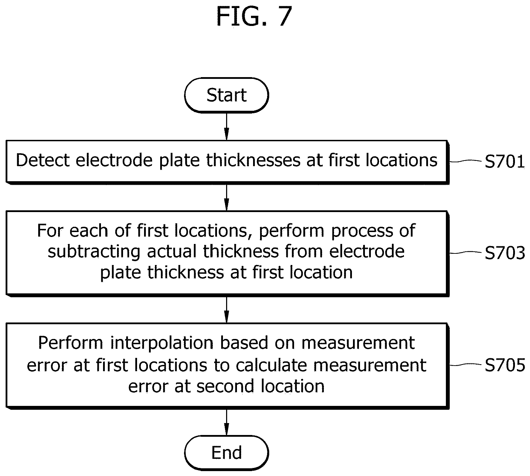

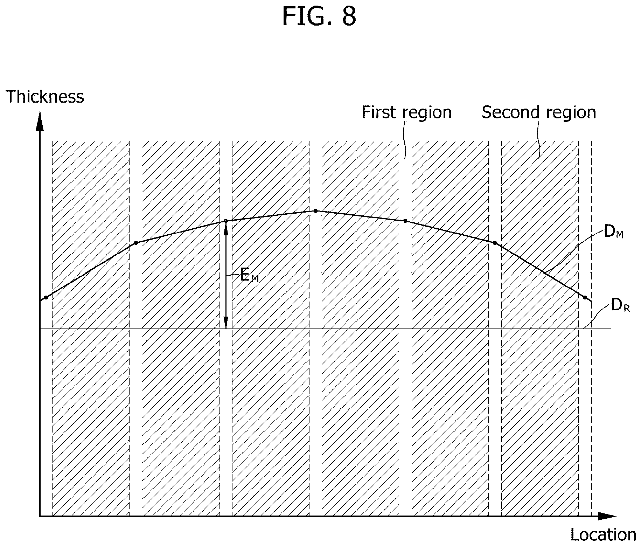

FIG. 7 is a flowchart illustrating the process of calculating the measurement error due to thermal deformation of the sensor module and FIG. 8 is an exemplary view of the process of calculating the measurement error due to thermal deformation of the sensor module.

Referring to FIG. 7, the processor 140 may first detect the thicknesses of the electrode plate at locations where the active material is not coated (hereinafter, referred to as first locations) (S701). Since the electrode plate 10 is formed with the columns of the active material coating layers 12, regions (location zones) of the electrode plate 10 in the width direction (X-axis direction) may be divided into regions in which the active material coating layer 12 is formed and regions in which the active material coating layer 12 is not formed.

In this embodiment, the region of the electrode plate in which the active material coating layer 12 is not formed will be defined as a first region and a location in the first region will be defined as a first location. Further, in this embodiment, the region of the electrode plate in which the active material coating layer 12 is formed may be defined as a second region and a location in the second region will be defined as a second location.

For example, assuming that six columns of the active material coating layers 12 are formed on the electrode plate 10 as shown in FIG. 8, there can be seven first regions and six second regions on the electrode plate 10, and the processor 140 may perform the process of detecting the thickness of the electrode plate in each of the seven first regions.

Next, the processor 140 may perform, for each of the first locations, the process of subtracting an electrode plate thickness measured at the first location before coating with the active material from the electrode plate thickness at the first location (S703). The processor 140 may calculate a measurement error at each of the first locations by performing, for each of the first locations, the process of subtracting the electrode plate thickness (actual thickness) measured at the first location before coating with the active material from the electrode plate thickness at the first location detected through the sensor module 110. The electrode plate thickness at each location before coating with the active material may be detected in advance and stored in the memory 130. Here, the electrode plate thickness before coating with the active material may refer to the electrode plate thickness measured before thermal deformation occurs in the sensor module 110, for example, the electrode plate thickness that does not include a measurement error due to thermal deformation of the sensor module 110.

For example, as shown in FIG. 8, the processor 140 may repeatedly perform the process of subtracting D_{R} (the electrode plate thickness before coating with the active material) for each point on D_{M} placed in the first region (with respect to the electrode plate thickness at the first location detected by the sensor module 110) to calculate measurement errors E_{M} at the first locations.

Next, the processor 140 may perform interpolation based on the measurement errors at the first locations to calculate the measurement errors at the second locations coated with the active material (S705). Since the active material coating layer 12 is formed in the second regions, the measurement errors at the second locations cannot be calculated by the same process as the process of calculating the measurement errors at the first locations. Therefore, according to this embodiment, an interpolation method is applied to the measurement errors at the first locations to calculate the measurement errors at the second locations. The processor 140 may perform interpolation using a variety of interpolation methods including linear interpolation, polynomial interpolation, spline interpolation, Lagrange interpolation, and the like.

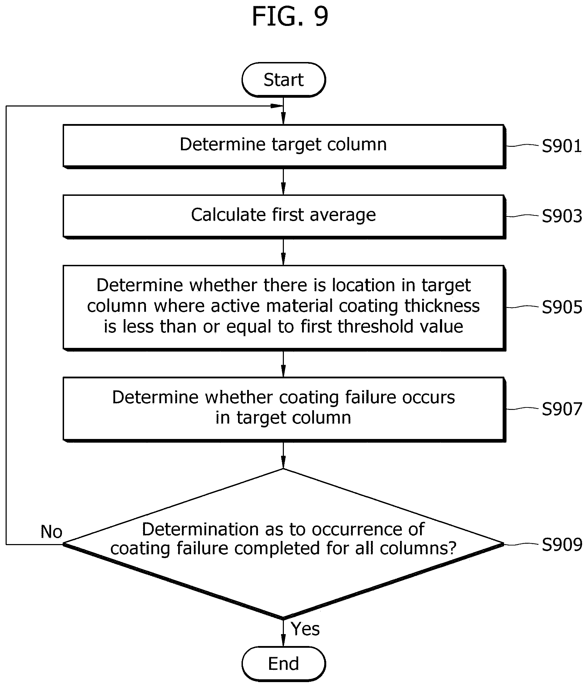

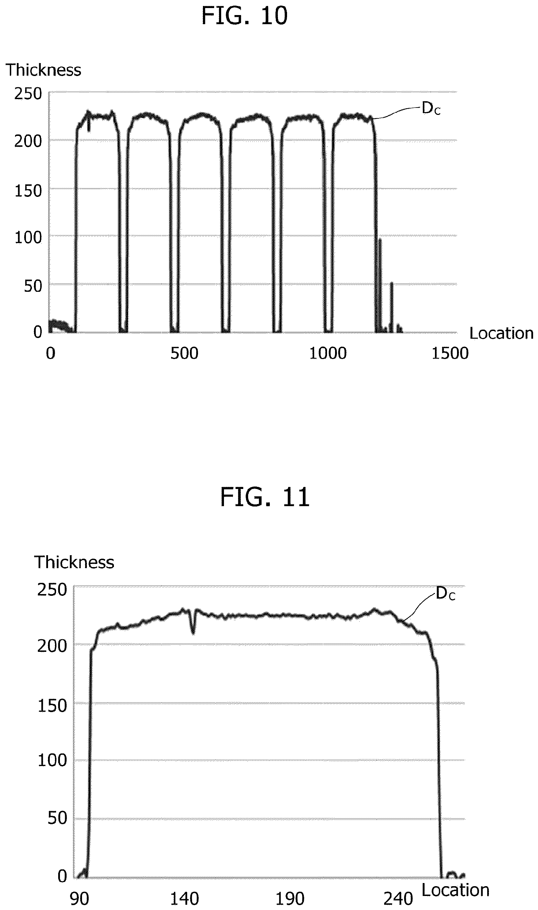

FIG. 9 is a flowchart illustrating a process of determining occurrence of coating failure and FIG. 10 to FIG. 12 are views illustrating the process of determining occurrence of coating failure.

Referring to FIG. 9, the processor 140 may first determine one of a plurality of columns of active material coating layers 12 formed on the electrode plate 10 as a target column (S901). The processor 140 may determine, as the target column, one of the columns of the active material coating layers 12, which has never been determined as the target column. FIG. 10 illustrates electrode plate thicknesses at locations for the entirety of the electrode plate 10 and FIG. 11 illustrates electrode plate thicknesses at locations in a certain column of the active material coating layer 12.

Next, the processor 140 may calculate an average (hereinafter, referred to as a first average) of the active material coating thicknesses at locations in the target column (S903). The processor 140 may calculate the first average after removing edge regions of the target column.

Next, the processor 140 may determine whether there is a location in the target column where the active material coating thickness is less than or equal to a first threshold value set based on the first average (S905). The processor 140 may set the first threshold value as a value equal to the first average multiplied by a preset first ratio. For example, the first ratio may be about 0.9%, without being limited thereto.

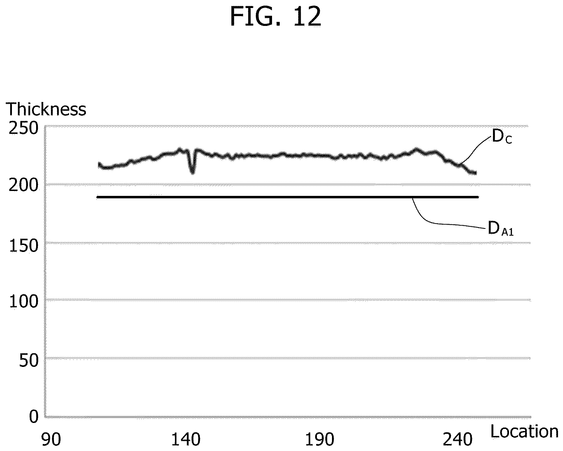

Next, the processor 140 may determine whether coating failure occurs in the target column based on a determination result as to whether there is a location in the target column where the active material coating thickness is less than or equal to the first threshold value (S907). Upon determining that there is a location in the target column where the active material coating thickness Dc is less than or equal to a first threshold value D_{A1}, the processor 140 may determine that coating failure occurs in the target column. The processor 140 may output a warning signal upon determining that coating failure occurs in the target column. On the other hand, as shown in FIG. 12, upon determining that there are no locations in the target column where the active material coating thickness Dc is less than or equal to the first threshold value D_{A1}, the processor 140 may determine that the target column has a normal coating condition.

If the active material slurry is not ejected normally from a slot die due to blockage by foreign matter or the like, the active material coating layer 12 can have streak defect. At a location where the streak defect occurs, the thickness of the electrode plate 10 is detected as a smaller value than at other locations. In this embodiment, this fact can be used to determine occurrence of coating failure on the electrode plate 10.

Next, the processor 140 may determine that the process of determining occurrence of coating failure is completed for all columns of the active material coating layers 12 formed on the electrode plate 10 (S909).

Upon determining that the process of determining occurrence of coating failure is not completed for all of the columns of the active material coating layers 12 formed on the electrode plate 10, the processor 140 may perform step S901 again. On the other hand, upon determining that the process of determining occurrence of coating failure is completed for all of the columns of the active material coating layers 12 formed on the electrode plate 10, the processor 140 may terminate the corresponding process.

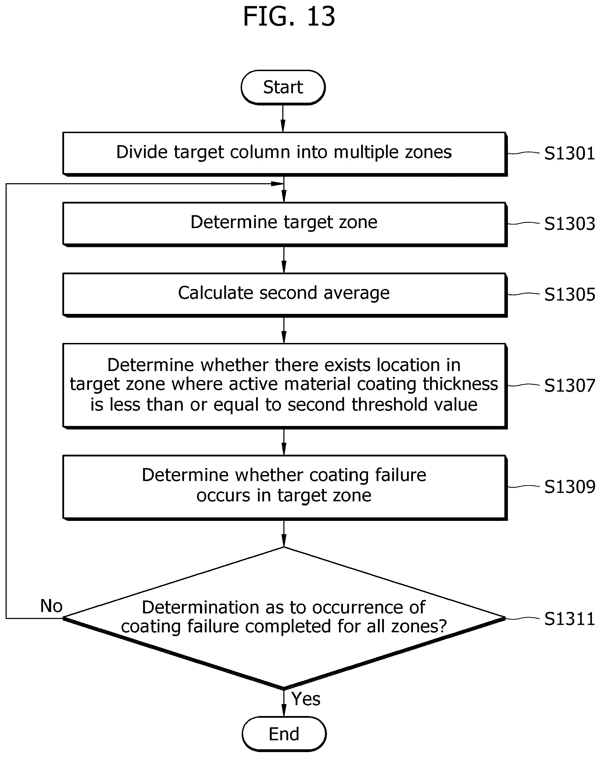

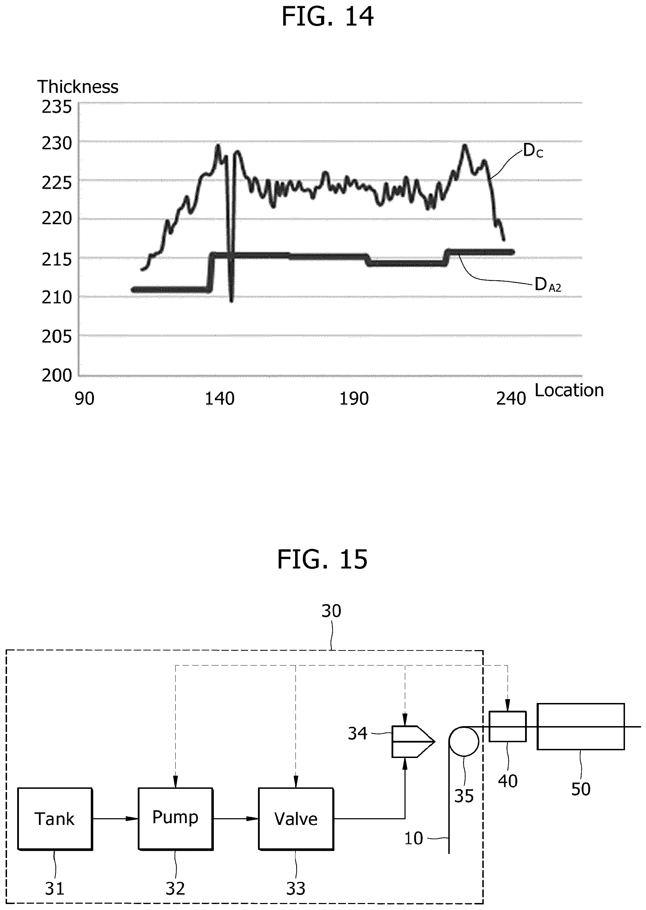

FIG. 13 is a flowchart illustrating the process of determining occurrence of coating failure and FIG. 14 is views illustrating the process of determining occurrence of coating failure.

Upon determining that there exists no locations in the target column where the active material coating thickness is less than or equal to the first threshold value, the process shown in FIG. 13 may be performed to secondarily verify occurrence of coating failure on the target column.

Referring to FIG. 13, the processor 140 may first divide the target column into multiple zones (S1301). The processor 140 may divide the target column into a preset number of zones. Each of the zones may have the same length.

Next, the processor 140 may determine one of the multiple zones as a target zone (S1303). The processor 140 may determine, as the target zone, one of the zones, which has never been determined as the target zone.

Next, the processor 140 may calculate an average (hereinafter, referred to as a second average) of active material coating thicknesses at locations in the target zone (S1305).

Next, the processor 140 may determine whether there is a location in the target zone where the active material coating thickness is less than or equal to a second threshold value set based on the second average (S1307). The processor 140 may set the second threshold value as a value equal to the second average multiplied by a preset second ratio. For example, the second ratio may be set between about 0.7 and about 0.99, without being limited thereto.

Next, the processor 140 may determine whether coating failure occurs in the target zone based on a determination result as to whether there is a location in the target zone where the active material coating thickness is less than or equal to the second threshold value (S1309). As shown in FIG. 14, upon determining that there is a location in the target zone where the active material coating thickness Dc is less than or equal to a second threshold value D_{A2}, the processor 140 may determine that coating failure occurs in the target zone. The processor 140 may output a warning signal upon determining that coating failure occurs in the target zone. On the other hand, upon determining that there are no locations in the target zone where the active material coating thickness Dc is less than or equal to the second threshold value D_{A2}, the processor 140 may determine that the target zone has a normal coating condition.

Next, the processor 140 may determine whether the process of determining occurrence of coating failure is completed for all of the zones on the electrode plate 10 (S1311).

Upon determining that the process of determining occurrence of coating failure is not complete for all of the zones on the electrode plate 10, the processor 140 may perform step S1301 again. On the other hand, upon determining that the process of determining occurrence of coating failure is not complete for all of the zones, the processor 140 may terminate the corresponding process.

FIG. 15 is a diagram of an electrode plate coating device 30 according to an embodiment of the present invention.

Referring to FIG. 15, the electrode plate coating device 30 according to the embodiment may include a tank 31, a pump 32, a valve 33, a slot die 34, a guide roll 35, and a control module (not shown).

The tank 31 may store the active material slurry. The pump 32 may be connected to the tank 31. The pump 32 may supply active material slurries stored in the tank 31 to the slot die 34. The slot die 34 may eject the active material slurries through an ejection port to coat the electrode plate 10 with the active material slurry. The valve 33 may be formed between the slot die 34 and the pump 32 to regulate the amount of the active material slurries supplied to the slot die 34. The guide roll 35 may move the electrode plate 10.

The control module may control the pump 32, the valve 33, and the slot die 34. The control module may control the revolutions per minute (RPM) of the pump 32. The control module may perform feedback control with respect to the revolutions per minute of the pump 32 based on the active material coating thickness (compensated active material coating thickness) detected through an apparatus for measuring an electrode plate thickness 40. The control module may reduce the revolutions per minute of the pump 32 when the active material coating thickness exceeds a preset thickness, and may increase the revolutions per minute of the pump 32 when the active material coating thickness is less than or equal to the preset thickness.

The control module may control the opening degree of the valve 33. The control module may perform feedback control with respect to the opening degree of the valve 33 based on the active material coating thickness (compensated active material coating thickness) detected through the measurement apparatus 40. The control module may reduce the opening degree of the valve 33 when the active material coating thickness exceeds a preset thickness, and may increase the opening degree of the valve 33 when the active material coating thickness is less than the preset thickness.

The control module may control a gap of the slot die 34. The control module may perform feedback control with respect to the gap of the slot die 34 based on the active material coating thickness (compensated active material coating thickness) detected through the measurement apparatus 40. The control module may reduce the gap of the slot die 34 when the active material coating thickness exceeds a preset thickness, and may increase the gap of the slot die 34 when the active material coating thickness is less than the preset thickness.

The control module may control the pump 32 when controlling the active material coating thickness over the entire region of the electrode plate 10, or may control the valve 33 and the slot die 34 when controlling the active material coating thickness for a certain column of the active material coating layer 12.

The electrode plate 10 coated with the active material slurry may be moved to the drying furnace 50 through the measurement apparatus 40. The measurement apparatus 40 may detect the active material coating thickness at each location in the width direction and transmit the detected values to the control module. The drying furnace 50 may dry the electrode plate 10 coated with the active material slurry.

According to the present invention, the thickness of an active material coating layer formed on an electrode plate can be measured before drying the electrode plate through a dryer.

According to the present invention, the thickness of the active material coating layer formed on the electrode plate can be calculated more accurately through compensation for measurement errors caused by thermal deformation of the sensor module.

According to the present invention, it is possible to detect streak defect that occurs during the process of coating an electrode plate with active material slurries.

Although the present invention has been described with reference to some embodiments and drawings illustrating aspects thereof, the present invention is not limited thereto. Various modifications and variations can be made by a person skilled in the art to which the present invention belongs within the scope of the present invention as defined by the appended claims and equivalents thereto.

## Claims

1. An apparatus (40, 100) for measuring an electrode plate thickness, comprising:
a sensor module (110) disposed upstream of a drying furnace (50) and detecting a thickness of an electrode plate (10); and
a processor (140) connected to the sensor module (110),
wherein the processor (140) is configured to detect the thickness of the electrode plate (10) at each location in a width direction through the sensor module (110), to calculate an active material coating thickness at each location based on the thickness of the electrode plate (10) at each location, and to compensate the active material coating thickness at each location based on a measurement error at each location due to thermal deformation of the sensor module (110).

2. The apparatus (40, 100) according to claim 1, wherein the sensor module (110) comprises a first sensor module (111) disposed above the electrode plate (10) and configured to measure a distance to the electrode plate (10) and a second sensor module (112) disposed below the electrode plate (10) and configured to measure a distance to the electrode plate (10), the first sensor module (111) and the second sensor module (112) being configured to be synchronously controlled.

3. The apparatus (40, 100) according to claim 1 or 2, wherein the processor (140) is configured to calculate the active material coating thickness at each location by performing a process of subtracting an electrode plate thickness measured before coating with an active material from the thickness of the electrode plate (10) detected by the sensor module (110).

4. The apparatus (40, 100) according to any one of the preceding claims, wherein the processor (140) is configured to detect electrode plate thicknesses at first locations not coated with an active material and to calculate the measurement error at each location based on the electrode plate thicknesses at the first locations, and
the processor (140) is configured to calculate a measurement error at each of the first locations by performing, for each of the first locations, a process of subtracting an electrode plate thickness measured at the first location before coating with the active material from the electrode plate thickness at the first location.

5. The apparatus (40, 100) according to any one of the preceding claims, wherein the processor (140) is configured to compensate the active material coating thickness at each location by performing, for each location, a process of subtracting the measurement error from the active material coating thickness.

6. The apparatus (40, 100) according to any one of the preceding claims, wherein the processor (140) is configured to transmit information about the active material coating thickness at each location to an electrode plate coating device (30) adapted to coat the electrode plate (10) with an active material such that a pump (32), a valve (33), and a slot die (34) of the electrode plate coating device (30) are under feedback control.

7. The apparatus (40, 100) according to any one of the preceding claims, wherein the processor (140)is configured to determine whether coating failure of the electrode plate (10) occurs based on the active material coating thickness at each location.

8. The apparatus (40, 100) according to claim 7, wherein the processor (140) is configured to determine a target column among a plurality of columns of active material coating layers (12) formed on the electrode plate (10) and to determine whether coating failure occurs in the target column by repeating a process of determining whether coating failure occurs in the target column while changing the target column.

9. The apparatus (40, 100) according to claim 8, wherein the processor (140) is configured to calculate a first average of active material coating thicknesses at each location for the target column and determines that coating failure occurs in the target column when there is a location in the target column where the active material coating thickness is less than or equal to a first threshold value set based on the first average.

10. The apparatus (40, 100) according to claim 8 or 9, wherein the processor (140) is configured to determines whether coating failure occurs in the target column by dividing the target column into multiple zones, to determine a target zone among the multiple zones, and to repeat a process of determining whether coating failure occurs in the target zone while changing the target zone.

11. A method for measuring an electrode plate thickness carried out by a computing device comprising a processor (140), the method comprising:
detecting an electrode plate thickness at each location in a width direction through a sensor module (110) disposed upstream of a drying furnace (50);
calculating an active material coating thickness at each location based on the electrode plate thickness at each location; and
compensating the active material coating thickness at each location based on a measurement error at each location due to thermal deformation of the sensor module (110).

12. The method according to claim 11, wherein the step of calculating an active material coating thickness at each location comprises performing, for each location, a process of subtracting an electrode plate thickness measured before coating with an active material from the electrode plate thickness detected through the sensor module (110) to calculate the active material coating thickness at each location.

13. The method according to claim 11 or 12, wherein the step of calculating a measurement error at each location comprises detecting electrode plate thicknesses at first locations not coated with an active material and calculating the measurement error at each location based on the electrode plate thicknesses at the first locations, and
the step of calculating a measurement error at each location comprises performing, for each of the first locations, a process of subtracting an electrode plate thickness measured at the first location before coating with the active material from the electrode plate thickness at the first location to calculate a measurement error at the first location.

14. The method according to any one of claims 11 to 13, wherein the step of compensating the active material coating thickness at each location comprises performing, for each location, a process of subtracting the measurement error from the active material coating thickness to compensate the active material coating thickness at each location.

15. The method according to any one of claims 11 to 14, further comprising: after the step of compensating the active material coating thickness at each location,
transmitting information about the active material coating thickness at each location to an electrode plate coating device (30) adapted to coat the electrode plate (10) with an active material such that a pump (32), a valve (33), and a slot die (34) of the electrode plate coating device (30) are under feedback control.
